# EUROPÄISCHE PATENTSCHRIFT

(11) **EP 3 867 112 B1**
(45) Veröffentlichungstag und Bekanntmachung des Hinweises auf die Patenterteilung: **12.07.2023**
(21) Anmeldenummer: 19782561.5
(22) Anmeldetag: 01.10.2019
(51) Int. Cl.: B60T 8/36, B60T 8/173

(54) **AKTUATORMODUL UND VERFAHREN ZUR MESSUNG UND VERARBEITUNG EINER FAHRDYNAMISCHEN GRÖSSE EINES FAHRZEUGS**
ACTUATOR MODULE AND METHOD FOR MEASURING AND PROCESSING A DRIVING DYNAMICS VARIABLE OF A VEHICLE
MODULE ACTIONNEUR ET PROCÉDÉ DE MESURE ET DE TRAITEMENT D'UNE GRANDEUR DE DYNAMIQUE DE CONDUITE D'UN VÉHICULE

(30) Priorität: 19.10.2018 DE 102018126094
(43) Veröffentlichungstag der Anmeldung: 25.08.2021
(73) Patentinhaber: ZF CV Systems Europe BV, 1170 Brussels (BE)
(72) Erfinder: VAN THIEL, Julian, 30161 Hannover (DE)
(74) Vertreter: Rabe, Dirk-Heinrich
(86) Internationale Anmeldenummer: PCT/EP2019/076519
(87) Internationale Veröffentlichungsnummer: WO 2020/078709

(56) Entgegenhaltungen:
- WO-A2-02/16179
- JP-A- 2009 292 208
- US-A1- 2013 261 905

## Beschreibung

Die Erfindung betrifft ein Aktuatormodul, insbesondere pneumatisches Aktuatormodul, für ein Aktuatorsystem eines Fahrzeugs, insbesondere Nutzfahrzeugs, wobei das Aktuatorsystem insbesondere ein Bremssystem des Fahrzeugs sein kann. Weiterhin betrifft die Erfindung ein derartiges Bremssystem und ein Verfahren zur Messung und Verarbeitung einer fahrdynamischen Größe eines Fahrzeugs.

Bremssysteme von Fahrzeugen können z.B. pneumatisch, hydraulisch oder auch elektromechanisch ausgebildet sein und weisen entsprechend pneumatische, hydraulische oder elektromechanische Aktuatoren auf. Als Aktuator ist hierbei eine Einrichtung zu verstehen, die in Abhängigkeit ihrer Ansteuerung eine Aktuatorleistung aussteuert bzw. erbringt. Pneumatische Aktuatoren können insbesondere Bremsventile sein, die in Abhängigkeit ihrer pneumatischen oder elektrischen Ansteuerung Bremsdrücke über Bremsleitungen zu den Fahrzeugbremsen, z.B. Bremszylindern, ausgeben. Elektromechanische Aktuatoren können insbesondere Bremshebel oder andere mechanische Brems-Einrichtungen einer mechanischen Fahrzeugbremse ansteuern. Entsprechend können hydraulische Aktuatoren insbesondere hydraulische Bremsventile sein, die über hydraulische Bremsleitungen hydraulische Fahrzeugbremsen ansteuern.

Im Bremssystem, insbesondere elektronischen Bremssystemen, sind weiterhin Fahrdynamik-Regelungen bekannt, die im Allgemeinen von einer Fahrdynamik-Steuereinrichtung gesteuert werden. Die Fahrdynamik- Steuereinrichtung kann insbesondere in der Brems-Steuereinrichtung des Bremssystems integriert oder mit dieser direkt verbunden sein, und zur Fahrdynamik-Regelung zum einen die Fahrzeugbremsen ansteuern und weiterhin ggf. weitere Eingriffe im Fahrzeug veranlassen, insbesondere durch Ausgabe von Motor- Anforderungssignalen. Zur Messung des fahrdynamischen Verhaltens des Fahrzeugs ist im Allgemeinen eine Fahrdynamik-Sensoreinrichtung vorgesehen, die ein oder mehrere Sensoren aufweisen kann, um fahrdynamische Größen des Fahrzeugs zu messen, insbesondere eine Längsbeschleunigung, Querbeschleunigung und/oder Drehraten oder Drehbeschleunigungen um eine der drei Fahrzeugachsen, d.h. die Gierachse (Hochachse), Längsachse (Rollachse) und Querachse (Nickachse). Die Fahrdynamik-Messsignale werden von der Fahrdynamik-Sensoreinrichtung an die Fahrdynamik-Steuereinrichtung ausgegeben, um entsprechende Fahrdynamik-Regelungen durchzuführen.

Die Fahrdynamik-Sensoreinrichtung wird als Einheit oder getrennt als mehrere Sensoren im Allgemeinen an einem geschützten Platz im Fahrzeug angebracht, um vor störenden Einflüssen, insbesondere störenden mechanischen Einflüssen, weitgehend geschützt zu sein.

Hierzu ist es zum einen bekannt, die Fahrdynamik-Sensoreinrichtung ganz oder teilweise auf dem Schaltungsträger der Fahrdynamik-Steuereinrichtung vorzusehen. Somit werden kurze Signalwege ermöglicht.

Die DE 10 2013 021 681 A1 beschreibt ein elektropneumatisches Bremssystem für ein Anhängefahrzeug mit mindestens zwei Achsen, deren Radbremszylinder jeweils von einem Modulator über Bremsdruckleitungen mit einer Antiblockier-Funktion angesteuert werden, wobei der zweite Modulator, vorzugsweise ein Hinterachs-Modulator, als Zusatz-Funktion eine Stabilitäts-Funktion regelt und hierzu einen Querbeschleunigungssensor enthalten oder Signale eines externen Querbeschleunigungssensors aufnehmen kann.

Die WO 2016/135435 A1 beschreibt ein Anhänger-Bremssystem mit Brems-ECU, die an einen Fahrzeug-Bus angeschlossen ist und über den Bus Daten von Sensoren aufnimmt. Hierbei sind mehrere Daten-Busse vorgesehen, um zum einen Sensordaten zu empfangen und weiterhin eine Kommunikation mit einer Brems-ECU zu erreichen.

Die EP 2 454 135 B1 beschreibt ein Steuergerät für eine Bremsanlage eines Fahrzeugs, das zum einen über ABS-Leitungen Raddrehzahlen von Raddrehzahlsensoren aufnimmt und zusätzliche Funktionalitäten zur Steuerung z. B. einer Fahrdynamik-Regeleinrichtung aufweist, z. B. als Fahrerassistenzsystem. Das Steuergerät kann wenigstens einen Sensor zur Sensierung eines Fahrzustandes des Fahrzeugs aufweisen, der ein Beschleunigungssensor, Gierratensensor und/oder Neigungssensor sein kann. Die EP 2 077 215 B1 beschreibt eine ähnliche Bremsanlage zur Abbremsung eines Lastkraftwagens oder Omnibus, wobei die Bremsanlage eine elektronische Steuereinrichtung außerhalb der Kabine an einem Tragwerk aufweist.

Die EP 2 254 779 B1 beschreibt eine Bremsanlage für ein Fahrzeug mit einer elektronischen und/oder elektropneumatischen Einrichtung, die u. a. ein Achsmodulator, ein Anhängersteuerventil, eine Steuereinrichtung eines elektronischen Bremssystems oder eine Fahrdynamik-Regelungseinrichtung sein kann. Hierbei kann ein Feststellbremsmodulator für die Feststellbremsanlage vorgesehen sein, die in der Nähe der Hinterachse des Fahrzeugs angeordnet ist und ein Modul der Fahrdynamikregelung aufweisen kann. In dem Modul der Fahrdynamikregelung können ein Beschleunigungssensor und ein Gierratensensor integriert sein, deren Daten für die Fahrdynamikregelung eingesetzt werden.

Die US 2013/0261905 A1 bezieht sich auf einen Fahrzeug-Bremsdruckregler, insbesondere auf einen Fahrzeug-Bremsdruckregler zur Regelung des Bremsdruckes auf der Basis der Ausgangswerte eines Sensors zur Erfassung der dynamischen Kenngrößen eines Fahrzeuges. Derartige Systeme erlauben bereits die Ausbildung einer Bremsanlage mit Fahrdynamik-Regelung unter Einbeziehung geeigneter Sensoren. Es zeigt sich jedoch, dass der Hardware-Aufwand im Allgemeinen recht hoch ist, insbesondere bei der Einbeziehung geeigneter Sensoren.

Der Erfindung liegt die Aufgabe zugrunde, ein Aktuatormodul, ein Bremssystem mit einem derartigen Aktuatormodul und ein Verfahren zur Messung und Verarbeitung einer fahrdynamischen Größe eines Fahrzeugs zu schaffen, die einen geringen Hardware-Aufwand und eine flexible Auslegung ermöglichen.

Diese Aufgabe wird durch ein Aktuatormodul und ein Verfahren nach den unabhängigen Ansprüchen gelöst. Weiterhin ist ein Bremssystem mit einem derartigen Aktuatormodul vorgesehen. Die Unteransprüche beschreiben bevorzugte Weiterbildungen.

Das erfindungsgemäße Verfahren kann insbesondere mit einem erfindungsgemäßen Aktuatormodul und/oder mit einem erfindungsgemäßen Bremssystem durchgeführt werden.

Somit ist ein Aktuatormodul vorgesehen, das in einer baulichen Einheit, insbesondere einer starren baulichen Einheit, vorzugsweise mit einem gemeinsamen Modul-Gehäuse, eine Aktuator-Steuereinheit, eine Fahrdynamik-Sensoreinrichtung und mindestens einen Aktuator vorsieht. Somit ist der Aktuator über eine starre Kopplung, insbesondere über das Modul-Gehäuse, mit weiteren Teilen des Aktuatormoduls, insbesondere auch der Fahrdynamik-Sensoreinrichtung, gekoppelt.

Durch diese Integration der Sensoreinrichtung in einem Aktuatormodul zusammen mit dem zumindest einen Aktuator wird insbesondere ein zusätzliches Gerät zur Aufnahme der Fahrdynamik-Sensorik vermieden. Hierdurch können insbesondere der Hardware-Aufwand, Kosten und Bauraum reduziert werden.

So können insbesondere die Fahrdynamik-Sensoreinrichtung und die Aktuator-Steuereinrichtung auf einem gemeinsamen Schaltungsträger in dem Aktuator-Gehäuse aufgenommen sein, wobei der Schaltungsträger starr mit dem Gehäuse gekoppelt, insbesondere an diesem befestigt ist. Der Aktuator kann z.B. starr an dem Gehäuse befestigt sein und zum Teil auch aus dem Gehäuse herausragen.

Als Aktuator wird hierbei eine Leistungseinrichtung verstanden, die eine Aktuatorleistung bzw. eine Aktuatorbetätigung steuert oder direkt ausführt, d. h. zur Aussteuerung einer Aktuatorleistung vorgesehen ist. Hierbei kann die Aktuatorleistung bzw. Aktuatorbetätigung mittels eines Fluids, d. h. pneumatisch oder hydraulisch, ausgeübt werden. Somit kann der Aktuator insbesondere ein pneumatisches, z. B. rein pneumatisches oder elektropneumatisches Ventil, oder entsprechend ein hydraulisches oder elektrohydraulisches Ventil sein bzw. mehrere Ventile aufweisen. Bei einer analogen Ansteuerung kann der Aktuator z. B. auch ein pneumatisch ausgesteuertes Bremsventil sein, das somit z. B. als pneumatisches Relaisventil wirkt und den z. B. von einer Brems-Steuerleitung eines Bremskanals kommenden Brems-Steuerdruck durchsteuert und verstärkt. Bei einem elektronischen Bremssystem kann der Aktuator z. B. ein elektronisch angesteuertes Druckluftventil, z. B. ein Proportionalventil, aufweisen.

Weiterhin kann der Aktuator auch elektrisch betätigt sein, d. h. ein elektromechanischer Aktuator sein, z. B. für ein elektromechanisches Bremssystem, oder auch bei einem Feststellbrems-Modul mit elektromechanischer Feststellbremse. Auch bei elektromechanischen Bremsen werden bei Betätigung Vibrationen und Körperschallwellen erzeugt, die somit - wie auch bei pneumatischen und hydraulischen Aktuatoren - über das gemeinsame Gehäuse, ggf. den gemeinsamen Schaltungsträger, an die Fahrdynamik- Sensoreinrichtung übertragen werden.

Um diese Einwirkung der störenden Vibrationen oder Körperschallwellen zu berücksichtigen, ist eine Signal-Kompensationseinrichtung vorgesehen, die die von der Fahrdynamik-Sensoreinrichtung zunächst ausgegebenen (ungefilterten) Sensor-Messsignale bzw. Fahrdynamik-Messsignale kompensiert bzw. filtert. Bei dieser Kompensation werden die Einwirkungen durch Vibrationen bzw. Körperschallwellen auf die Sensoren berücksichtigt und - zumindest teilweise, insbesondere weitgehend - kompensiert bzw. gefiltert. Somit gibt die Signal-Kompensationseinrichtung kompensierte Fahrdynamik-Messsignale aus, die dann entsprechend von der Fahrdynamik- Steuereinrichtung zur Fahrdynamik-Regelung herangezogen werden können.

Der Erfindung liegt hierbei der Gedanke zugrunde, dass die starre Kopplung bzw. bauliche Integration der Fahrdynamik-Sensoreinrichtung in einem Modul eines Aktuators zwar zu einer nachteilhaften Beeinträchtigung der Sensoreinrichtung durch die mechanischen Vibrationen, Schläge und Körperschallwellen führen kann; diese Beeinträchtigungen können jedoch grundsätzlich elektronisch herausgefiltert oder herauskompensiert werden. So liegen grundsätzlich Informationen über die Aktuatorbetätigungen direkt vor, da die Aktuator-Steuereinrichtung den Aktuator ansteuert.

So wird der Aktuator im Allgemeinen von einer Treiberschaltung mit entsprechenden Leistungsströmen angesteuert, d. h. z. B. das Solenoid eines elektropneumatischen oder elektrohydraulischen Ventils oder eine elektromechanische Verstelleinrichtung bestromt. Da somit Aktuator-Informationen über die Aktuatorbetätigung bereits vorliegen, können die durch die Aktuatorbetätigung erzeugten, nachteilhaften Körperschallwellen bzw. ihre Auswirkung auf die Sensorsignale, nachfolgend erkannt bzw. zugeordnet und somit herausgefiltert werden.

Weiterhin können derartige Vibrationen und Körperschallwellen auch durch Kenntnis der Modulausbildung ermittelt und berücksichtigt werden; insbesondere können z. B. Frequenzen bzw. Resonanz-Frequenzen des Moduls berücksichtigt werden, die bei einer Aktuator-Betätigung verstärkt auftreten.

Die Signal-Kompensationseinrichtung kann aus den Aktuator- Informationssignalen insbesondere Informationen über die Art der Aktuator-Betätigung, z. B. das Öffnen oder Schließen eines Ventils, weiterhin die Frequenz und den Betrag bzw. die Höhe der Betätigung enthalten. Weiterhin können als Informationen auch vorliegende Druckverhältnisse bzw. die Volumenströme betreffen, die durch einen z. B. pneumatischen oder hydraulischen Aktuator bei einer entsprechenden Betätigung voraussichtlich gesteuert werden. So kann insbesondere auch eine elektrische PWM-Ansteuerung direkt als Informationssignal herangezogen werden, um die Ausbildung der Körperschallwellen zu ermitteln.

So kann in dem Aktuator- Informationssignal insbesondere eine Zeitinformation übertragen werden, d.h. in welchem Zeitraum eine direkte aktive mechanische Verstellung erfolgt, z.B. ein Ventil durch die Solenoid-Bestromung aktiv von einem in den anderen Zustand (geschlossen - offen oder offen - geschlossen) verstellt wird, da bei der direkten Verstellung die größten mechanischen Belastungen auftreten. Auch Informationen über die verschiedenen Schaltzustände sind relevant, da z. B. bei einem geöffnetem Ventil das Strömen eines Fluids zu einer Vibrationsausbildung führen kann, die berücksichtigt werden kann, insbesondere entsprechend den Resonanz -Verhältnissen.

Die Kompensation kann insbesondere eine Tiefpass-Filterung aufweisen, bei der somit Signalschwankungen mit höheren Frequenzen der Aktuatorbetätigung zugeordnet und herausgefiltert werden.

Gegebenenfalls kann ein Zeitpunkt oder Zeitraum einer starken Aktuatorbetätigung, z. B. bei mechanischer Verstellung des Ankers, insbesondere auch dem Auftreffen eines Ankers bzw. beweglichen Teils auf einem Ventilsitz, auch bei der Signalverarbeitung ausgeblendet bzw. herausgenommen werden; dem liegt die Erkenntnis zugrunde, dass ggf. das Fehlen entsprechender Signale in einem Zeitraum von einer Zehntelsekunde oder weniger für die weitere Signalverarbeitung nicht relevant ist, und insbesondere durch die umgebenden Zeitbereiche interpoliert werden kann.

Vorteilhafterweise weist das Aktuatormodul einen Fahrzeugbus-Anschluss, insbesondere CAN-Bus-Anschluss, auf. Somit können die in dem Aktuatormodul aufgenommenen und gefilterten bzw. kompensierten Messsignale nachfolgend über den Fahrzeugbus anderen Einrichtungen zur Verfügung gestellt werden, insbesondere weiteren Modulen der Bremseinrichtung, z. B. einem weiteren Achsmodul, sowie dem zentralen Steuermodul. Auch können über den Fahrzeugbus die Fahrdynamiksignale an andere Einrichtungen weitergegeben werden.

Neben dem Einsatz in einem Achs-Bremsmodulator, insbesondere Hinterachs-Bremsmodulator, ist auch die Ausbildung eines Radmodulators, Parkbremsmodulators, eines Anhängersteuer-Moduls (TCM) möglich sowie weiterhin auch einer Luftaufbereitungseinheit, einer Bremswertgeber- Moduleinheit (Bremspedal-Modul), oder auch eines Moduls der Luftfedereinrichtung, bei der ein Aktuator der Luftfedereinrichtung, insbesondere ein pneumatisches Steuerventil einer Luftfeder, betätigt wird.

Entsprechende Vorteile ergeben sich für das erfindungsgemäße Verfahren. Es kann insbesondere mit geringem Hardware-Aufwand, insbesondere in einer Steuereinrichtung, insbesondere der Fahrdynamik-Steuereinrichtung durchgeführt werden, so dass hier auch jeweils flexibel Verbesserungen z.B. als updates einer Programmierung eingepflegt werden können, z.B. auch bei Ersatz der Sensoren und/ oder der Aktuatoren,
bzw. bei Feststellen einer Änderung der Sensoren und/oder Aktuatoren, z.B. auch bei einer Alterung.

Die Erfindung wird im Folgenden anhand der beiliegenden Zeichnungen an einigen Ausführungsformen näher erläutert. Es zeigen:
- Fig. 1: ein elektropneumatisches Schaltbild eines elektronischen Bremssystems eines Nutzfahrzeugs;
- Fig. 2: ein Blockschaltbild eines Aktuatormoduls gemäß einer Ausführungsform der Erfindung;
- Fig. 3: ein Blockschaltbild eines Aktuatormoduls gemäß einer weiteren Ausführungsform mit integrierter Fahrdynamik-Steuereinrichtung;
- Fig. 4: ein Signaldiagramm relevanter Signale.

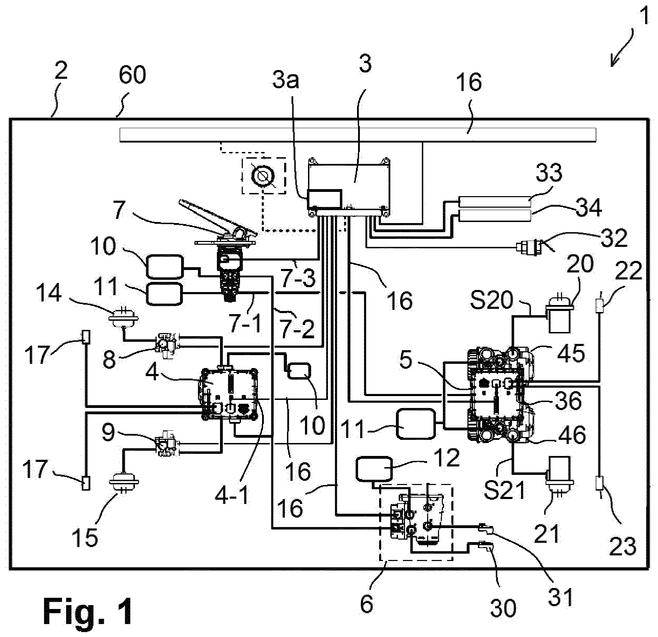

Gemäß Figur 1 ist in einem - hier nicht detaillierter dargestellten - Nutzfahrzeug 1 ein elektronisches Bremssystem (EBS) 2 vorgesehen, mit einer elektronischen Brems-Steuereinrichtung (ECU) 3, die integriert auch eine Fahrdynamik-Steuereinrichtung (ESC-Controller) 3a aufweist, weiterhin einem Vorderachs-Modulator 4, einem Hinterachs-Modulator 5, einem Trailer Control Modul (Anhängersteuermodul) TCM 6 und einem Bremswertgeber-Modul 7. Das Bremswertgeber-Modul 7 weist gemäß dieser Ausbildung z.B. einen elektrischen Ausgangskanal 7-1 auf, d.h. es dient als elektrischer Bremswertgeber, und zwei pneumatische Steuerausgänge 7-2 und 7-3, die an die Vorratsspeicher 10 (erster Vorratsspeicher oder erster Systemdruck) und 11 (zweiter Druckluft-Vorrat oder zweiter Systemdruck) angeschlossen sind. Der Vorderachs-Modulator 4 ist an den - hier der Übersichtlichkeit halber mehrfach eingezeichneten - ersten Druckluftspeicher 10 angeschlossen und leitet somit den ersten Systemdruck an ein rechtes vorderes elektropneumatisches Bremsventil 8 und ein linkes vorderes elektropneumatisches Bremsventil 9 durch, die gemäß der hier gezeigten Ausbildung mit elektrischen Brems-Steuersignalen S8 und S9 direkt von der ECU 3 angesteuert werden. Die elektropneumatischen Bremsventile 8 und 9 steuern entsprechend einen linken vorderen Bremszylinder 14 und einen rechten vorderen Bremszylinder 15 jeweils pneumatisch an.

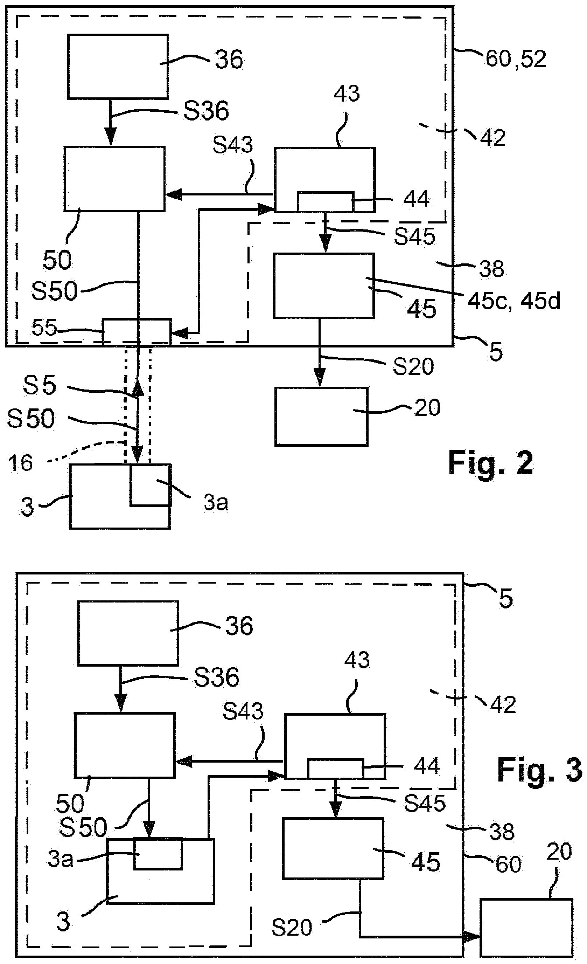

Der Hinterachs-Bremsmodulator 5 ist an den zweiten Druckluft-Vorrat 11 und zur Bereitstellung einer pneumatischen Rückfallebene an den zweiten pneumatischen Steuerausgang 7-2 angeschlossen und weist weiterhin gemäß der detaillierteren Darstellung der Fig. 2 einen CAN-Bus-Anschluss 55 für einen fahrzeuginternen CAN-Bus 16 auf. Ein als Proportionalventil ausgebildetes rechtes elektropneumatisches Bremsventil 45 und ein entsprechendes linkes elektropneumatisches Bremsventile 46 sind im Hinterachs- Bremsmodulator 5 integriert, wobei das rechte elektropneumatische Bremsventil 45 einen hinteren rechten Bremszylinder 20 mit einem pneumatischen Bremsdruck S20 ansteuert und entsprechend das linke elektropneumatische Bremsventil 46 einen hinteren rechten Bremszylinder 21 mit einem pneumatischen Bremsdruck S21 ansteuert.

Der Hinterachs- Bremsmodulator 5 kann insbesondere von der elektronischen Brems-Steuereinrichtung 3 über den CAN-Bus 16 ECU-Steuersignale S5 aufnehmen, weiterhin über seine integrierten, elektropneumatischen Bremsventile 45 und 46 den ersten Systemdruck des ersten Druckluft-Vorrats 10 regulieren, d.h. insbesondere in der Höhe einstellen und an die Bremszylinder 20 und 21 als pneumatische Bremsdrücke S20, S21 ausgeben; weiterhin kann er gegebenenfalls als pneumatische Rückfallebene den über den ersten pneumatischen Steuerausgang (ersten pneumatischen Bremskanal) 7-1 ausgegebenen pneumatischen Steuerdruck durchleiten. Raddrehzahl-Sensoren 22 und 23 geben ihre elektrischen Raddrehzahl-Signale n22 und n23 hier entsprechend an den Hinterachs- Bremsmodulator 5 aus, der diese Daten über den CAN-Bus 16 dann weiter zur Verfügung stellt.

Das Trailer-Control-Modul 6 kann als elektropneumatisches Modul mit integrierter Steuereinrichtung oder als einfaches Ventil (Trailer-Control-Ventil) ausgebildet sein, wobei es z. B. an den zweiten pneumatischen Steuerausgang 7-2 und über eine elektrische TCV-Steuerleitung 24 an die elektronische Steuereinrichtung 2 angeschlossen. An das Trailer-Control-Modul 6 sind in an sich bekannter Weise der rote Kupplungskopf 30 zur Versorgung des Anhängers mit dem Vorratsdruck (Systemdruck) und der gelbe Kupplungskopf 31 zur pneumatischen Ansteuerung des Anhängers bzw. Anhänger-Bremssystems vorgesehen. Weiterhin ist gemäß der hier gezeigten Ausbildung auch ein CAN-Bus-Anschluss 32 für den Anhänger vorgesehen, der hier an die elektrische Steuereinrichtung 2 vorgesehen ist. Die elektronische Steuereinrichtung 3 kann weiterhin an eine Stromversorgung (Power Supply) 33 angeschlossen sein und entsprechend elektrische Anschlussleitungen für Schalter und Lampen 34 aufweisen.

Gemäß der gezeigten Ausbildung ist in der elektronischen Brems- Steuereinrichtung 3 eine Fahrdynamik-Steuereinrichtung 3a, d.h. eine elektronische Stabilitätskontrolle (ESC) integriert, die zur Stabilitätsregelung des Nutzfahrzeugs 1 durch Ansteuerung der Radbremsen, d.h. der Bremszylinder 17, 20, 21 dient. Die Stabilitätsregelung kann insbesondere Schleuderzustände und Wank-Neigungen bzw. Gier-Neigungen und Nick-Neigungen des Nutzfahrzeugs 1 erkennen und durch asymmetrische Bremseingriffe entgegenwirken. Ergänzend kann die Fahrdynamik-Steuereinrichtung 3a ggf. eine Ansteuerung des Motors vornehmen, indem sie Motor-Anforderungssignale über den CAN-Bus 16 an eine Motorsteuereinrichtung ausgibt. Entsprechend wird der angeschlossene Anhänger über den Anhänger-CAN-Anschluss 32 mitgeregelt.

Die Brems-Steuereinrichtung 3 nimmt zur Stabilitätsregelung über den CAN-Bus 16 allgemeine Fahrzeug-Dynamik-Signale auf, z.B. die Fahrgeschwindigkeit und ggf. Zustandssignal des Motors. Weiterhin kann sie die Raddrehzahl-Signale n16, n20 und n21 der Raddrehzahlsensoren 17, 20 und 21 aufnehmen, die von dem Vorderachs-Bremsmodul 4 und Hinterachs- Bremsmodul 5 aufgenommen und über den CAN-Bus 16 weitergeleitet werden.

Weiterhin ist eine Fahrdynamik- Sensoreinrichtung 36 vorgesehen, die als einheitlicher Block oder durch mehrere Elemente ausgebildet sein kann und insbesondere ein oder mehrere der folgenden physikalischen Fahrdynamik-Größen des Nutzfahrzeugs 1 messen kann:
eine Längsbeschleunigung aL, eine Querbeschleunigung aq, eine Gierrate ω,
eine Gierbeschleunigung a_ω,weiterhin auch Drehraten und/oder Drehbeschleunigungen um die beiden weiteren Achsen, d.h. eine Wank-Rate als Drehrate um die Längsachse, eine Nick-Rate um die Querachse, sowie auch Fahrzeug-Neigungen, d.h. die Schräglagen das Fahrzeugs in Querrichtung und/oder Längsrichtung.

Wie in der Ausführungsform der Figur 2 gezeigt erzeugt die Fahrdynamik-Sensoreinrichtung 36 zunächst Fahrdynamik-Messsignale S36, die jedoch nicht direkt an die Brems-Steuereinrichtung 3 ausgegeben werden; die Fahrdynamik-Messsignale S36 werden vielmehr an eine Signal- Kompensationseinrichtung 50 (Signal-Filtereinrichtung) ausgegeben, die die Fahrdynamik-Messsignale S36 filtert und kompensierte Fahrdynamik-Messsignale S50 über den CAN-Bus 16 an die Brems-Steuereinrichtung 3 und die in der Steuereinrichtung 3 vorgesehene ESC-Regeleinrichtung 3a ausgibt, wie nachfolgend beschrieben wird.

Der Hinterachs-Bremsmodulator 5 weist ein gemeinsames Gehäuse 38 und einen Schaltungsträger 42 auf, der z.B. als Platine ausgebildet sein kann und im Allgemeinen am Gehäuse 38 mechanisch befestigt ist. In dem Hinterachs-Bremsmodulator 5 sind auf dem Schaltungsträger 42 eine Aktuator- Steuereinrichtung 43 und die Fahrdynamik-Sensoreinrichtung 36 aufgenommen, wobei eine Treiberschaltung 44 zur elektrischen Ansteuerung des Bremsventils 45 z.B. in der Modul-Steuereinrichtung 43 integriert oder auch von dieser getrennt ausgebildet sein kann. Weiterhin sind das rechte hintere Bremsventil 45 - und hier nicht gezeigt auch das linke hintere Bremsventil 46 - in dem Gehäuse 38 aufgenommen oder an dem Gehäuse 38 befestigt bzw. mit diesem starr verbunden.

Die elektropneumatischen Bremsventile 45, 46 erzeugen bei ihrer Betätigung, d.h. insbesondere ihrer Verstellung, mechanische Erschütterungen, die als Vibrationen oder als Schläge bzw. Stöße wirken und auch auf den Schaltungsträger 42 und somit die Fahrdynamik-Sensoreinrichtung 36 eingekoppelt werden, so dass insbesondere Messungen von Geschwindigkeiten, Beschleunigungen, Drehraten und Drehbeschleunigungen beeinflusst werden. Gemäß der Ausführungsform der Figur 2 gibt die Steuereinrichtung 43 zusätzlich zur Ansteuerung des elektropneumatischen Bremsventils 45 mit dem Aktuator-Ansteuersignal S45 ein Aktuator- Informationssignal S43 mit Informationen über die Ansteuerung, insbesondere der Art (Typ) der Ansteuerung, der Frequenz und der Größe bzw. des analogen Stromwerts bzw. der auszusteuernden pneumatischen Luftmenge, an die Signal- Kompensationseinrichtung 50 aus, die die direkt erzeugten Fahrdynamik-Messsignale S36 der Fahrdynamik-Sensoreinrichtung 36 aufnimmt und diese in Abhängigkeit der Aktuator- Informationssignale S43 filtert bzw. kompensiert und somit kompensierte Fahrdynamik-Messsignale S50 erzeugt, die z.B. über die CAN-Bus-Schnittstelle 55 und den CAN-Bus 16 an die Brems-Steuereinrichtung 3 ausgegeben werden.

Somit können die mechanischen Beeinflussungen, die als Körperschallwellen von den jeweiligen Aktuator, hier somit einem elektropneumatischen Bremsventil 45, über ein Gehäuse 38 und den Schaltungsträger 42 auf die Fahrdynamik-Sensoreinrichtung 36 einwirken, nachfolgend elektrisch bzw. signaltechnisch kompensiert oder gefiltert werden, und somit die nachfolgend verwendeten Fahrdynamik-Messsignale 36 mit entsprechender elektrischer Filterung zur Verfügung gestellt werden.

Grundsätzlich kann das Aktuator-Informationssignal S43 auch direkt durch das Aktuator-Ansteuersignal S45 gebildet werden, z.B. bei Einsatz eines PWM-Signals. Bei dieser Ausbildung sind dann die weitergehenden Informationen über die Aktuatorverstellung, d.h. über Art und Umfang bzw. über die Zeitpunkte der Betätigung, in der Kompensationseinrichtung 50 gespeichert bzw. vorgesehen.

Gemäß der zu Fig. 2 alternativen Ausführungsform der Figur 3 ist die Brems-Steuereinrichtung 3 und somit die Fahrdynamik-Steuereinrichtung (ESC-Controller) 3a Teil des Aktuatormoduls 5, d.h. in dem Gehäuse 38 aufgenommen, vorzugsweise auch auf dem Schaltungsträger 42. Somit werden die kompensierte Fahrdynamik-Messsignale S50 der Brems- Steuereinrichtung 3 bereits über den Schaltungsträger, d.h. nicht über den CAN-Bus 16 zur Verfügung gestellt werden; sie können aber ergänzend über den CAN-Bus 16 weiteren Einrichtungen zur Verfügung gestellt werden.

Die Fahrdynamik-Sensoreinrichtung 36 kann z. B. auch im Vorderachs-Modulator 4 vorgesehen sein. Grundsätzlich kann die Fahrdynamik-Sensoreinrichtung auch im Anhänger-Steuermodul 7 vorgesehen sein, wenn dieses als intelligentes TCM mit eigener Steuereinrichtung ausgebildet ist.

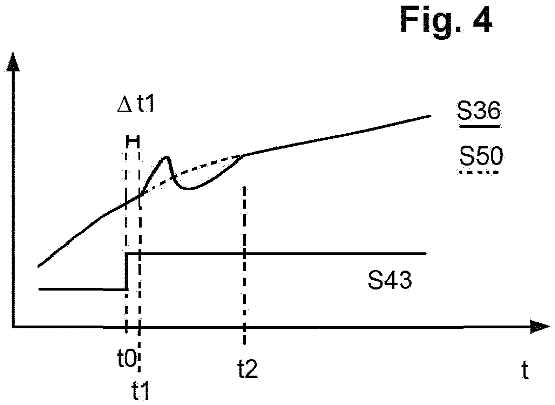

Figur 4 zeigt schematisch eine Ausführungsform einer erfindungsgemäßen Signalverarbeitung. Das direkt aufgenommene Fahrdynamik-Messsignal S36 kann hier z. B. ein Längs-Beschleunigungssignal sein; weiterhin ist schematisch das Aktuator-Informationssignal S43 eingezeichnet sowie gestrichelt das kompensierte Fahrdynamik-Messsignal S50, das in seinem weiteren Verlauf identisch ist zum Fahrdynamik-Messsignal S36. Zu einem Zeitpunkt t0 wird über das Aktuator-Ansteuersignal S45 eine Aktuator-Betätigung angesteuert, die entsprechend mit dem Aktuator-Informationssignal S43, das auch das Aktuator-Ansteuersignal S45, z.B. ein PWM-Signal, sein kann, mitgeteilt wird. Mit einer zeitlichen Verzögerung Δt1, die sich entsprechend durch die Magnet-Ansteuerung und zeitliche Verzögerung der Aufbau entsprechender Kräfte ergibt, wird zu einem Zeitpunkt t1 das verstellbare Teil des Aktuatormoduls 5, d. h. z. B. der Anker, mechanisch verstellt, so dass hierdurch zum einen die mechanische Bewegung des Ankers Körperschallwellen auslösen kann, und weiterhin die hierdurch geschalteten Fluid-Ströme zu z. B. schlagartig einsetzenden Körperschallwellen führen können. Gemäß Figur 4 erzeugen die Körperschallwellen in einem Zeitraum von t1 bis t2 ein Störsignal, woraufhin nachfolgend ab dem Zeitpunkt t2 die Verstellung erfolgt ist und die neuen Fluidströme sich eingestellt haben, wobei der Anker entsprechend in der zweiten Position angelangt ist. Somit kann ab t2 wieder das Signal ohne relevante Filterung verwendet werden. Es kann jedoch z.B. auch vor t0 und nach t2 eine Filterung aufgrund der in den Schaltzuständen vorgesehenen unterschiedlichen, dauerhaft erfolgenden Fluidströme vorgesehen sein.

Somit können insbesondere auch zeitliche Verzögerungen zwischen der Ansteuerung eines Aktuators und der Verstellung des Aktuators bei der Kompensation bzw. Filterung berücksichtigt werden. Hierbei kann das Fahrdynamik-Messsignal S36 zum einen tiefpassgefiltert werden mit entsprechenden Filter-Zeiten. Weiterhin kann auch z.B. der Zeitraum der aktiven Verstellung von t1 bis t2 herausgenommen werden und aus den angrenzenden Bereichen interpoliert werden, wenn dieser Zeitraum hinreichend klein ist. Das gemäß Figur 4 kompensierte bzw. gefilterte Fahrdynamik-Messsignal S50 kann somit ausgegeben werden.

### Bezugszeichenliste (Teil der Beschreibung)

- 1: Nutzfahrzeug
- 2: elektronische Bremseinrichtung (EBS)
- 3: elektronische Steuereinrichtung (ECU) des EBS 2, ESC-Controller
- 3a: ESC-Regeleinrichtung 3a, ESC-Controller
- 4: Vorderachs-Bremsmodulator
- 5: Hinterachs-Bremsmodulator
- 6: Trailer-Steuerventil (TCV oder TCM)
- 7: Bremspedal, Bremswertgeber
- 7-1: erster pneumatischer Bremskanal, erster pneumatischer Steuerausgang
- 7-2: zweiter pneumatischer Bremskanal, zweiter pneumatischer Steuerausgang
- 7-3: elektrisches Bremswertsignal, elektrischer Bremskanal
- 8: rechtes vorderes Bremsventil
- 9: linkes vorderes Bremsventil
- 10: erster Druckluft-Vorrat (erster Systemdruck)
- 11: zweiter Druckluft-Vorrat (zweiter Systemdruck)
- 12: dritter Druckluft-Vorrat (dritter Systemdruck)

- 14: rechter vorderer Bremszylinder
- 15: linker vorderer Bremszylinder
- 16: CAN-Bus
- 17: vordere Raddrehzahl-Sensoren,
- 18: Achse

- 20: pneumatischer Verbraucher, z.B. hinterer rechter Bremszylinder
- 21: pneumatischer Verbraucher, z.B. hinterer linker Bremszylinder
- 22, 23: hintere Raddrehzahl-Sensoren
- 24: elektrische TCV-Steuerleitung
- 30: gelber Anhänger-Kupplungskopf
- 31: roter Anhänger-Kupplungskopf
- 32: CAN-Bus-Anschluss für den Anhänger
- 33: Stromversorgung (Power Supply) für die ECU 3
- 34: Schalter und Lampen, die von der ECU 3 angesteuert werden
- 36: Fahrdynamik-Sensoreinrichtung
- 38: Gehäuse
- 42: Schaltungsträger, z.B. Platine
- 43: Hinterachs-Bremssteuereinrichtung
- 45: Aktuator, insbesondere pneumatischer Aktuator, z.B. rechtes hinteres Bremsventil (Proportionalventil)
- 45a: elektrische Treiberschaltung

- 45b: pneumatischer Aktuator
- 45c: elektrisch betätigtes Proportionalventil
- 45d: elektromechanischer Aktuator
- 45e: elektromechanischer Brems-Aktuator
- 45f: hydraulischer Aktuator

- 46: linkes hinteres elektropneumatisches Bremsventil (Proportionalventil)
- 46a: elektrische Treiberschaltung
- 50: Signal-Kompensationseinrichtung, z.B. Filtereinrichtung

- 55: Bus-Schnittstelle
- 60: bauliche Einheit
- 62: zeitlichen Änderungen, z.B. hochfrequente Änderungen

- 80: Radbremsmodul
- 81: Parkbremsmodul
- 83: Aktuatormodul der Luftfederung 84
- 84: Luftfederung des Fahrzeugs 1.
- 90: Körperschallwellen

- 91: Schaltzustände
- 92: Strömungsverhältnisse
- 93: Fluid
- 94: Lageinformationen der relative Lage des Aktuators 45
- 95: relative Lage des Aktuators 45 zu der Fahrdynamik- Sensoreinrichtung 36,
- 96: Art der Aktuatorbetätigung
- 97: hydraulische Bremszylinder
- 98: elektromechanische Radbremsen

- Δt1: Zeitliche Verzögerung
- t2-t1: Zeitraum
- I_61: Informationen über die Aktuatorbetätigung

- TP: Tiefpassfilterung des Fahrdynamik-Messsignals S36
- Af: Frequenz der Aktuatorbetätigung
- AG: Größe der Aktuatorbetätigung.

- S5: Brems-Steuersignal von der Brems-Steuereinrichtung (ECU) 3 an den Hinterachs-Bremsmodulator 5, z.B. über den CAN-Bus 16
- S8: elektrisches Brems-Steuersignal an das rechte vordere Bremsventil 8
- S9: elektrisches Brems-Steuersignal an das linke vordere Bremsventil 9

- S36: Fahrdynamik-Messsignale
- S50: gefilterte Fahrdynamik-Messsignale
- S43: Aktuator-Informationssignal
- S45: Aktuator-Ansteuersignale an den Aktuator
- S20: pneumatisches Ansteuersignal an Verbraucher, z.B. hinteren rechten Bremszylinder 20

- n16, n20,n21: Raddrehzahl-Signale
- aL: Längsbeschleunigung
- aq: Querbeschleunigung
- ω: Gierrate
- a_ω: Gierbeschleunigung

- phi: Wankwinkel
- v_phi: Wankrate
- a_phi: Wank-Beschleunigung
- theta: Nickwinkel
- v_theta: Nickrate
- a_theta: Nick-Beschleunigung

## Patentansprüche

1. Aktuatormodul (5) für ein Aktuatorsystem (2) eines Fahrzeugs (1), wobei das Aktuatormodul (5) aufweist:
eine Aktuator- Steuereinrichtung (43) zur Ausgabe eines Aktuator- Ansteuersignals (S45),
mindestens einen Aktuator (45, 46), der das Aktuator- Ansteuersignal (S45) aufnimmt und in Abhängigkeit des Aktuator- Ansteuersignals (S45) eine Aktuatorbetätigung ausführt,
eine Fahrdynamik-Sensoreinrichtung (36) zum Messen mindestens einer fahrdynamischen Messgröße (aL, aq, ω, psi) des Fahrzeugs (1) und Erzeugen eines Fahrdynamik-Messsignals (S36), und
eine Signal-Kompensationseinrichtung (50) zum Aufnehmen des Fahrdynamik-Messsignals (S36),
wobei der Aktuator (45, 46), die Aktuator- Steuereinrichtung (43), die Fahrdynamik-Sensoreinrichtung (36) und die Signal- Kompensationseinrichtung (50) in einer baulichen Einheit (60) vorgesehen sind,
**dadurch gekennzeichnet, dass**
die Signal-Kompensationseinrichtung (50) ferner zum Aufnehmen eines die Aktuatorbetätigung anzeigenden Aktuator-Informationssignals (S43) der Aktuator- Steuereinrichtung (43), Filtern des Fahrdynamik-Messsignals (S36) in Abhängigkeit des Aktuator-Informationssignals (S43) und Ausgeben eines kompensierten Fahrdynamik-Messsignals (S50) eingerichtet ist.

2. Aktuatormodul (5) nach Anspruch 1, **dadurch gekennzeichnet, dass** als bauliche Einheit ein Modul-Gehäuse (52) vorgesehen ist, in dem die Aktuator- Steuereinrichtung (43), die Fahrdynamik-Sensoreinrichtung (36) und die Signal-Kompensationseinrichtung (50) angebracht oder angeordnet sind und an oder in dem der Aktuator (45, 46) befestigt ist.

3. Aktuatormodul (5) nach einem der vorherigen Ansprüche, **dadurch gekennzeichnet, dass** es einen fest in dem Gehäuse (38) aufgenommenen Schaltungsträger (42), z.B. eine Platine, aufweist, auf dem die Aktuator-Steuereinrichtung (43), die Sensoreinrichtung (35) und die Signal- Kompensationseinrichtung (50) angebracht sind.

4. Aktuatormodul (5) nach einem der vorherigen Ansprüche, **dadurch gekennzeichnet, dass**
das Aktuatorsystem (2) ein pneumatisches System (2), vorzugsweise ein Bremssystem (2) des Fahrzeugs (1) ist, und
der Aktuator (45) ein pneumatischer Aktuator (45b) für einen pneumatischen Verbrauchsvorgang, z.B. ein pneumatisches Bremsventil (45, 46) zum Ansteuern eines pneumatischen Bremsdrucks (S20) an einen pneumatischen Verbraucher, z.B. einen Bremszylinder (20, 21) ist.

5. Aktuatormodul (5) nach Anspruch 4, **dadurch gekennzeichnet, dass** der Aktuator (45) ein elektrisch betätigtes Proportionalventil (45c) ist, insbesondere für ein elektronisches Bremssystem (2).

6. Aktuatormodul (5) nach einem der Ansprüche 1 bis 3, **dadurch gekennzeichnet, dass** der Aktuator (45) ein elektromechanischer Aktuator (45d), z. B. ein elektromechanischer Brems-Aktuator (45e) zur Ansteuerung eines Bremshebels, oder ein hydraulischer Aktuator (45f) ist.

7. Aktuatormodul (5) nach einem der vorherigen Ansprüche, **dadurch gekennzeichnet, dass** es ein Bremsmodul (5), z.B. Hinterachs-Bremsmodul (5) oder Vorderachs-Bremsmodul (4) des Bremssystems (2) ist, zur Ansteuerung der Fahrzeugbremsen (20, 21, 17) einer Achse (18) des Fahrzeugs (1).

8. Aktuatormodul (5) nach einem der Ansprüche 1 bis 6, **dadurch gekennzeichnet, dass** es ein Aktuatormodul (5) aus der folgenden Gruppe ist:
Radbremsmodul (80) zur Ansteuerung einer einzelnen Radbremse (17, 20, 21), Parkbremsmodul (81), Anhängersteuermodul (6), Luftaufbereitungseinheit (82), Bremswertgeber-Modul (7), Aktuatormodul (83) einer Luftfederung (81) des Fahrzeugs (1).

9. Aktuatormodul (5) nach einem der vorherigen Ansprüche, **dadurch gekennzeichnet, dass** die Fahrdynamik-Sensoreinrichtung (36) ein oder mehrere der folgenden fahrdynamischen Größen misst:
Längsbeschleunigung (aL), Querbeschleunigung (aq), Gierrate (ω), Wankrate (v_phi), Nickrate (v_theta), Gierbeschleunigung (a_ω), Nick-Beschleunigung (a_theta), Wank-Beschleunigung (a_phi), Nickwinkel (theta), Wankwinkel (phi).

10. Aktuatormodul (5) nach einem der vorherigen Ansprüche, **dadurch gekennzeichnet, dass** die Signal-Kompensationseinrichtung (50) das Fahrdynamik-Messsignal (S36) filtert, indem sie
- in dem Fahrdynamik-Messsignal (S36) zeitliche Änderungen (62), insbesondere hochfrequente Änderungen (62), einer durch das Aktuator-Informationssignal (S43) beschriebenen und durch Körperschallwellen (90) auf die Fahrdynamik-Sensoreinrichtung (36) übertragenen Aktuatorbetätigung zuordnet und
- die zeitlichen Änderungen (62) verringert oder wegfiltert.

11. Aktuatormodul (5) nach Anspruch 10, **dadurch gekennzeichnet, dass** die Signal-Kompensationseinrichtung (50)
- eine Tiefpassfilterung (TP) des Fahrdynamik-Messsignals (S36) durchführt und/oder
- das Fahrdynamik-Messsignal (S36) in einem Betätigungs-Zeitraum (t1, t2) des Aktuators (45) interpoliert.

12. Aktuatormodul (5) nach Anspruch 11, **dadurch gekennzeichnet, dass** die Signal-Kompensationseinrichtung (50) die Tiefpassfilterung (TP) durchführt in Abhängigkeit eine oder mehreren der folgenden Informationen (I_61):
- Zeitpunkt (t0) und/oder Zeitraum (Δt) einer aktiven Verstellung des Aktuators (45) und/oder einer Aktuatorbetätigung,
- unterschiedliche passive Zustände des Aktuators (45), z.B. unterschiedliche Schaltzustände (91)des Aktuators (45) mit den jeweiligen Strömungsverhältnissen (92)eines durchgeleiteten Fluids (93),
- Lageinformationen (94)der relativen Lage (95)des Aktuators (45) zu der Fahrdynamik-Sensoreinrichtung (36),
- Art(96) der Aktuatorbetätigung,
- Frequenz (Af) und/oder Größe (AG) der Aktuatorbetätigung.

13. Aktuatormodul (5) nach Anspruch 12, **dadurch gekennzeichnet, dass** die Informationen (I_61) in dem Aktuator-Informationssignal (S43) enthalten oder in der Signal-Kompensationseinrichtung (50) gespeichert sind.

14. Aktuatormodul (5) nach Anspruch 13, **dadurch gekennzeichnet, dass** die Informationen (I_61) in der Signal-Kompensationseinrichtung (50) gespeichert sind und die Signal-Kompensationseinrichtung (50) als Aktuator- Informationssignal (S43) das Aktuator- Ansteuersignal (S45) aufnimmt.

15. Aktuatormodul (5) nach einem der vorherigen Ansprüche, **dadurch gekennzeichnet, dass** es das kompensierte Fahrdynamik-Messsignal (S50) über eine Schnittstelle (55), z.B. Bus-Schnittstelle (55), ausgibt, vorzugsweise an andere Einrichtungen (3, 3a), insbesondere eine Brems-Steuereinrichtung (3) des Bremssystems (2) und/oder eine Fahrdynamik-Steuereinrichtung (3a).

16. Aktuatormodul (5) nach einem der Ansprüche 1 bis 14, **dadurch gekennzeichnet, dass** eine Fahrdynamik-Steuereinrichtung (3a) in dem Aktuatormodul (5) vorgesehen ist und das kompensierte Fahrdynamik-Messsignal (S36) in dem Aktuatormodul (5) an die Fahrdynamik-Steuereinrichtung (3a) ausgegeben wird.

17. Aktuatormodul (5) nach einem der vorherigen Ansprüche, **dadurch gekennzeichnet, dass** es weiterhin Raddrehzahl-Signale (n22, n23) von Raddrehzahlsensoren (22, 23) aufnimmt und weiterleitet, z.B. über einen fahrzeuginternen Bus, insbesondere einen CAN-Bus (16), vorzugsweise über die Bus-Schnittstelle (55), insbesondere an die Fahrdynamik- Steuereinrichtung (3).

18. Bremssystem (2) für ein Fahrzeug (1) insbesondere Nutzfahrzeug (1) (), wobei das Bremssystem (2) aufweist:
eine Fahrdynamik-Steuereinrichtung (3a),
mehrere Radbremsen (17, 20, 21), und
ein Aktuatormodul (5) nach einem der vorherigen Ansprüche, dessen Aktuator- Steuereinrichtung (43) ECU-Steuersignale (S5) von der Fahrdynamik-Steuereinrichtung (3a) aufnimmt und dessen Aktuator (45, 46) mindestens eine der Radbremsen (20, 21) ansteuert,
wobei die Fahrdynamik-Steuereinrichtung (3a) eine Fahrdynamik- Regelung durchführt unter Aufnahme der kompensierten Fahrdynamik-Messsignale (S50) des Aktuatormoduls (5) und unter Ausgabe der Bremsssteuersignalen (S5) an das Aktuatormodul (5) zur selektiven Bremsung eines oder mehrerer Radbremsen (20, 21).

19. Bremssystem (2) nach Anspruch 18, **dadurch gekennzeichnet, dass** die Fahrdynamik-Steuereinrichtung (3a) in einer Brems- Steuereinrichtung (3) des Bremssystems (2) integriert ist, wobei die Radbremsen (17, 20, 21) pneumatische Bremszylinder (17, 20, 21) und/oder hydraulische Bremszylinder (97)und/oder elektromechanische Radbremsen (98) aufweisen.

20. Bremssystem (2) nach Anspruch 18 oder 19, **dadurch gekennzeichnet, dass** es ein elektronisches Bremssystem (2) ist, wobei das Aktuatormodul (5) über einen fahrzeuginternen Datenbus (16), z.B. CAN-Bus (16), mit weiteren Einrichtungen (3, 4) des Bremssystems (2) und/oder weiteren Einrichtungen des Fahrzeugs (1) verbunden ist.

21. Bremssystem (2) nach Anspruch 20, **dadurch gekennzeichnet, dass** das Aktuatormodul (5) ein Achs-Bremsmodul, z.B. Hinterachs-Bremsmodul (5) oder Vorderachs-Bremsmodul (4) ist, das über den fahrzeuginternen Datenbus (16) mit mindestens einem weiteren Achs-Bremsmodul (4) und/oder der Fahrdynamik-Steuereinrichtung (3a) verbunden ist und über den fahrzeuginternen Datenbus (16) die kompensierten Fahrdynamik- Messsignale (S50) ausgibt.

22. Fahrzeug (1), insbesondere Nutzfahrzeug, mit einem Bremssystem (2) nach einem der Ansprüche 18 bis 21.

23. Verfahren zur Messung und Verarbeitung einer fahrdynamischen Größe eines Fahrzeugs, mit mindestens folgenden Schritten:
- Ausgabe eines Aktuator- Ansteuersignals (S45) an einen Aktuator (45, 46) für eine Aktuatorbetätigung,
- Erzeugen eines die Aktuatorbetätigung anzeigenden Aktuator-Informationssignals (S43),
- Ausführung der Aktuatorbetätigung durch den Aktuator (45, 46) in Abhängigkeit des Aktuator- Ansteuersignals (S45)
- Messen mindestens einer fahrdynamischen Messgröße (aL, aq, psi) des Fahrzeugs (1) mittels einer Fahrdynamik-Sensoreinrichtung (36), die mit dem Aktuator (45, 46) mechanisch in einer baulichen Einheit (60) verbunden ist, während der Aktuatorbetätigung und Erzeugen eines Fahrdynamik-Messsignals (S36), und **gekennzeichnet durch** folgende Schritte
- Aufnehmen des Fahrdynamik-Messsignals (S36) und des Aktuator-Informationssignals (S43),
- Filtern des Fahrdynamik-Messsignals (S36) in Abhängigkeit des Aktuator-Informationssignals (S43) und
- Ausgeben eines kompensierten Fahrdynamik-Messsignals (S50).

## Claims

1. Actuator module (5) for an actuator system (2) of a vehicle (1), the actuator module (5) comprising:
an actuator control device (43) for outputting an actuator activation signal (S45),
at least one actuator (45, 46) that receives the actuator activation signal (S45) and performs an actuator operation on the basis of the actuator activation signal (S45),
a driving dynamics sensor device (36) for measuring at least one driving dynamics measurement variable (aL, aq, ω, psi) of the vehicle (1) and generating a driving dynamics measurement signal (S36), and
a signal compensation device (50) for receiving the driving dynamics measurement signal (S36),
the actuator (45, 46), the actuator control device (43), the driving dynamics sensor device (36) and the signal compensation device (50) being provided in a structural unit (60), **characterized in that**
the signal compensation device (50) is further configured to receive an actuator information signal (S43) of the actuator control device (43), which signal indicates the actuator operation, filter the driving dynamics measurement signal (S36) on the basis of the actuator information signal (S43) and output a compensated driving dynamics measurement signal (S50).

2. Actuator module (5) according to claim 1, **characterized in that** a module housing (52) is provided as a structural unit, in which housing the actuator control device (43), the driving dynamics sensor device (36) and the signal compensation device (50) are mounted or arranged and on or in which the actuator (45, 46) is fastened.

3. Actuator module (5) according to either of the preceding claims, **characterized in that** it has a circuit carrier (42), e.g., a printed circuit board, which is fixedly received in the housing (38) and on which the actuator control device (43), the sensor device (35) and the signal compensation device (50) are mounted.

4. Actuator module (5) according to any of the preceding claims, **characterized in that**
the actuator system (2) is a pneumatic system (2), preferably a braking system (2) of the vehicle (1), and
the actuator (45) is a pneumatic actuator (45b) for a pneumatic consumer process, e.g., a pneumatic brake valve (45, 46) for activating a pneumatic brake pressure (S20) on a pneumatic consumer, e.g., a brake cylinder (20, 21).

5. Actuator module (5) according to claim 4, **characterized in that** the actuator (45) is an electrically operated proportional valve (45c), in particular for an electronic braking system (2).

6. Actuator module (5) according to any of claims 1 to 3, **characterized in that** the actuator (45) is an electromechanical actuator (45d), e.g., an electromechanical brake actuator (45e) for activating a brake lever, or a hydraulic actuator (45f).

7. Actuator module (5) according to any of the preceding claims, **characterized in that** it is a braking module (5), e.g., rear axle braking module (5) or front axle braking module (4) of the braking system (2), for activating the vehicle brakes (20, 21, 17) of an axle (18) of the vehicle (1).

8. Actuator module (5) according to any of claims 1 to 6, **characterized in that** it is an actuator module (5) from the following group: wheel brake module (80) for activating a single wheel brake (17, 20, 21), parking brake module (81), trailer control module (6), air treatment unit (82), brake value transmitter module (7), actuator module (83) of an air suspension (81) of the vehicle (1).

9. Actuator module (5) according to any of the preceding claims, **characterized in that** the driving dynamics sensor device (36) measures one or more of the following driving dynamics variables: longitudinal acceleration (aL), lateral acceleration (aq), yaw rate (ω), roll rate (v_phi), pitch rate (v_theta), yaw acceleration (a_ω), pitch acceleration (a_theta), roll acceleration (a_phi), pitch angle (theta), roll angle (phi).

10. Actuator module (5) according to any of the preceding claims, **characterized in that** the signal compensation device (50) filters the driving dynamics measurement signal (S36) **in that**,
- in the driving dynamics measurement signal (S36), it assigns temporal changes (62), in particular high-frequency changes (62), to an actuator operation described by the actuator information signal (S43) and transmitted by structure-borne sound waves (90) to the driving dynamics sensor device (36), and
- reduces or filters away the temporal changes (62).

11. Actuator module (5) according to claim 10, **characterized in that** the signal compensation device (50)
- carries out a low-pass filtering (TP) of the driving dynamics measurement signal (S36) and/or
- interpolates the driving dynamics measurement signal (S36) in an operation period (t1, t2) of the actuator (45).

12. Actuator module (5) according to claim 11, **characterized in that** the signal compensation device (50) carries out the low-pass filtering (TP) on the basis of one or more of the following pieces of information (I_61):
- time (t0) and/or time period (Δt) of an active adjustment of the actuator (45) and/or an actuator operation,
- different passive states of the actuator (45), e.g., different switching states (91) of the actuator (45) with the respective flow ratios (92) of a transmitted fluid (93),
- positional information (94) of the relative position (95) of the actuator (45) with respect to the driving dynamics sensor device (36),
- type (96) of actuator operation,
- frequency (Af) and/or variable (AG) of the actuator operation.

13. Actuator module (5) according to claim 12, **characterized in that** the pieces of information (I_61) are contained in the actuator information signal (S43) or stored in the signal compensation device (50).

14. Actuator module (5) according to claim 13, **characterized in that** the pieces of information (I_61) are stored in the signal compensation device (50) and the signal compensation device (50) receives the actuator activation signal (S45) as an actuator information signal (S43).

15. Actuator module (5) according to any of the preceding claims, **characterized in that** it outputs the compensated driving dynamics measurement signal (S50) via an interface (55), e.g., a bus interface (55), preferably to other devices (3, 3a), in particular a brake control device (3) of the braking system (2) and/or a driving dynamics control device (3a).

16. Actuator module (5) according to any of claims 1 to 14, **characterized in that** a driving dynamics control device (3a) is provided in the actuator module (5) and the compensated driving dynamics measurement signal (S36) in the actuator module (5) is output to the driving dynamics control device (3a).

17. Actuator module (5) according to any of the preceding claims, **characterized in that** it also receives wheel speed signals (n22, n23) from wheel speed sensors (22, 23) and forwards them, e.g., via a vehicle-internal bus, in particular a CAN Bus (16), preferably via the bus interface (55), in particular to the driving dynamics control device (3).

18. Braking system (2) for a vehicle (1), in particular a commercial vehicle (1) (), wherein the braking system (2) comprises:
a driving dynamics control device (3a),
a plurality of wheel brakes (17, 20, 21), and
an actuator module (5) according to any of the preceding claims, the actuator control device (43) of which receives ECU control signals (S5) of the driving dynamics control device (3a) and the actuator (45, 46) of which activates at least one of the wheel brakes (20, 21),
wherein the driving dynamics control device (3a) carries out driving dynamics control while receiving the compensated driving dynamics measurement signals (S50) of the actuator module (5) and outputting the brake control signals (S5) to the actuator module (5) for selective braking of one or more wheel brakes (20, 21).

19. Braking system (2) according to claim 18, **characterized in that** the driving dynamics control device (3a) is integrated in a brake control device (3) of the braking system (2), the wheel brakes (17, 20, 21) having pneumatic brake cylinders (17, 20, 21) and/or hydraulic brake cylinders (97) and/or electromechanical wheel brakes (98).

20. Braking system (2) according to either claim 18 or claim 19, **characterized in that** it is an electronic braking system (2), the actuator module (5) being connected to further devices (3, 4) of the braking system (2) and/or further devices of the vehicle (1) via a vehicle-internal data bus (16), e.g., CAN bus (16).

21. Braking system (2) according to claim 20, **characterized in that** the actuator module (5) is an axle braking module, e.g., rear axle braking module (5) or front axle braking module (4), which is connected via the vehicle-internal data bus (16) to at least one further axle braking module (4) and/or the driving dynamics control device (3a) and outputs the compensated driving dynamics measurement signals (S50) via the vehicle-internal data bus (16).

22. Vehicle (1), in particular commercial vehicle, comprising a braking system (2) according to any of claims 18 to 21.

23. Method for measuring and processing a vehicles dynamics variable of a vehicle, comprising at least the following steps:
- outputting an actuator activation signal (S45) to an actuator (45, 46) for actuator operation,
- generating an actuator information signal (S43) which indicates the actuator operation,
- performing the actuator operation via the actuator (45, 46) on the basis of the actuator activation signal (S45)
- measuring, during the actuator operation, at least one driving dynamics measurement variable (aL, aq, psi) of the vehicle (1) by means of a driving dynamics sensor device (36) which is mechanically connected to the actuator (45, 46) in a structural unit (60), and generating a driving dynamics measurement signal (S36), and **characterized by** the following steps:
- receiving the driving dynamics measurement signal (S36) and the actuator information signal (S43),
- filtering the driving dynamics measurement signal (S36) on the basis of the actuator information signal (S43) and
- outputting a compensated driving dynamics measurement signal (S50).

## Revendications

1. Module d'actionneur (5) pour un système d'actionneur (2) d'un véhicule (1), le module d'actionneur (5) présentant :
un dispositif de commande d'actionneur (43) pour l'émission d'un signal de commande d'actionneur (S45),
au moins un actionneur (45, 46), lequel reçoit le signal de commande d'actionneur (S45) et exécute, en fonction du signal de commande d'actionneur (S45), une activité d'actionneur,
un dispositif de capteur de dynamique de conduite (36) pour la mesure d'au moins une grandeur de mesure de dynamique de conduite (aL, aq, ω, psi) du véhicule (1) et la génération d'un signal de mesure de dynamique de conduite (S36), et
un dispositif de compensation de signal (50) pour la réception du signal de mesure de dynamique de conduite (S36),
l'actionneur (45, 46), le dispositif de commande d'actionneur (43), le dispositif de capteur de dynamique de conduite (36) et le dispositif de compensation de signal (50) étant prévus dans une unité structurale (60), **caractérisé en ce que**
le dispositif de compensation de signal (50) est en outre conçu pour la réception d'un signal d'information d'actionneur (S43) du dispositif de commande d'actionneur (43) indiquant l'activité d'actionneur, le filtrage du signal de mesure de dynamique de conduite (S36) en fonction du signal d'information d'actionneur (S43) et l'émission d'un signal de mesure de dynamique de conduite compensé (S50).

2. Module d'actionneur (5) selon la revendication 1, **caractérisé en ce qu'**un boîtier de module (52) est prévu en tant qu'unité structurale, dans lequel le dispositif de commande d'actionneur (43), le dispositif de capteur de dynamique de conduite (36) et le dispositif de compensation de signal (50) sont montés ou agencés et sur ou dans lequel l'actionneur (45, 46) est fixé.

3. Module d'actionneur (5) selon l'une des revendications précédentes, **caractérisé en ce qu'**il présente un support de circuit (42), par exemple une carte de circuit imprimé, reçu de manière fixe dans le boîtier (38), sur lequel le dispositif de commande d'actionneur (43), le dispositif de capteur (35) et le dispositif de compensation de signal (50) sont montés.

4. Module d'actionneur (5) selon l'une des revendications précédentes, **caractérisé en ce que**
le système d'actionneur (2) est un système pneumatique (2), de préférence un système de freinage (2) du véhicule (1), et
l'actionneur (45) est un actionneur pneumatique (45b) pour un processus de consommation pneumatique, par exemple une soupape de frein (45, 46) pneumatique pour la commande d'une pression de freinage pneumatique (S20) sur un consommateur pneumatique, par exemple un cylindre de frein (20, 21).

5. Module d'actionneur (5) selon la revendication 4, **caractérisé en ce que** l'actionneur (45) est une soupape proportionnelle (45c) actionnée électriquement, en particulier pour un système de freinage (2) électronique.

6. Module d'actionneur (5) selon l'une des revendications 1 à 3, **caractérisé en ce que** l'actionneur (45) est un actionneur
électromécanique (45d), par exemple un actionneur de freinage (45e) électromécanique pour la commande d'un levier de frein, ou un actionneur hydraulique (45f).

7. Module d'actionneur (5) selon l'une des revendications précédentes, **caractérisé en ce qu'**il s'agit d'un module de freinage (5), par exemple un module de freinage d'essieu arrière (5) ou un module de freinage d'essieu avant (4) du système de freinage (2), pour la commande des freins de véhicule (20, 21, 17) d'un essieu (18) du véhicule (1).

8. Module d'actionneur (5) selon l'une des revendications 1 à 6, **caractérisé en ce qu'**il s'agit d'un module d'actionneur (5) faisant partie du groupe suivant : module de freinage de roue (80) pour la commande d'un frein de roue individuel (17, 20, 21), module de freinage de stationnement (81), module de commande de remorque (6), unité de traitement d'air (82), module de générateur de valeur de freinage (7), module d'actionneur (83) d'une suspension pneumatique (81) du véhicule (1).

9. Module d'actionneur (5) selon l'une des revendications précédentes, **caractérisé en ce que** le dispositif de capteur de dynamique de conduite (36) mesure une ou plusieurs des grandeurs de dynamique de conduite suivantes :
accélération longitudinale (aL), accélération transversale (aq), vitesse de lacet (ω), vitesse de roulis (v_phi), vitesse de tangage (v_thêta), accélération de lacet (a_ω), accélération de tangage (a_thêta), accélération de roulis (a_phi), angle de tangage (thêta), angle de roulis (phi).

10. Module d'actionneur (5) selon l'une des revendications précédentes, **caractérisé en ce que** le dispositif de compensation de signal (50) filtre le signal de mesure de dynamique de conduite (S36)
- en associant, dans le signal de mesure de dynamique de conduite (S36), des modifications temporelles (62), en particulier des modifications à haute fréquence (62), à une activité d'actionneur décrite par le signal d'information d'actionneur (S43) et transmise au dispositif de capteur de dynamique de conduite (36) par des ondes sonores de structure (90) et
- en réduisant ou en filtrant pour les éliminer les modifications temporelles (62).

11. Module d'actionneur (5) selon la revendication 10, **caractérisé en ce que** le dispositif de compensation de signal (50)
- effectue un filtrage passe-bas (TP) du signal de mesure de dynamique de conduite (S36) et/ou
- interpole le signal de mesure de dynamique de conduite (S36) dans un intervalle de temps d'actionnement (t1, t2) de l'actionneur (45).

12. Module d'actionneur (5) selon la revendication 11, **caractérisé en ce que** le dispositif de compensation de signal (50) effectue le filtrage passe-bas (TP) en fonction d'une ou plusieurs des informations (I_61) suivantes :
- un moment (t0) et/ou un intervalle de temps (Δt) d'un réglage actif de l'actionneur (45) et/ou d'une activité d'actionneur,
- différents états passifs de l'actionneur (45), par exemple différents états de commutation (91) de l'actionneur (45) avec les conditions d'écoulement (92) respectives d'un fluide (93) conduit,
- des informations de position (94) de la position relative (95) de l'actionneur (45) par rapport au dispositif de capteur de dynamique de conduite (36),
- le type (96) de l'activité d'actionneur,
- la fréquence (Af) et/ou la grandeur (AG) de l'activité d'actionneur.

13. Module d'actionneur (5) selon la revendication 12, **caractérisé en ce que** les informations (I_61) sont contenues dans le signal d'information d'actionneur (S43) ou enregistrées dans le dispositif de compensation de signal (50).

14. Module d'actionneur (5) selon la revendication 13, **caractérisé en ce que** les informations (I_61) sont enregistrées dans le dispositif de compensation de signal (50) et le dispositif de compensation de signal (50) reçoit le signal de commande d'actionneur (S45) en tant que signal d'information d'actionneur (S43).

15. Module d'actionneur (5) selon l'une des revendications précédentes, **caractérisé en ce qu'il** émet le signal de mesure de dynamique de conduite compensé (S50) par l'intermédiaire d'une interface (55), par exemple une interface de bus (55), de préférence à d'autres dispositifs (3, 3a), en particulier un dispositif de commande de frein (3) du système de freinage (2) et/ou un dispositif de commande de dynamique de conduite (3a).

16. Module d'actionneur (5) selon l'une des revendications 1 à 14, **caractérisé en ce qu'un** dispositif de commande de dynamique de conduite (3a) est prévu dans le module d'actionneur (5) et le signal de mesure de dynamique de conduite compensé (S36) est émis dans le module d'actionneur (5) au dispositif de commande de dynamique de conduite (3a).

17. Module d'actionneur (5) selon l'une des revendications précédentes, **caractérisé en ce qu'il** reçoit et retransmet en outre des signaux de vitesse de rotation de roue (n22, n23) de capteurs de vitesse de rotation de roue (22, 23), par exemple par l'intermédiaire d'un bus interne au véhicule, en particulier un bus CAN (16), de préférence par l'intermédiaire d'une interface de bus (55), en particulier au dispositif de commande de dynamique de conduite (3).

18. Système de freinage (2) pour un véhicule (1), en particulier un véhicule utilitaire (1) (), le système de freinage (2) présentant :
un dispositif de commande de dynamique de conduite (3a),
plusieurs freins de roue (17, 20, 21), et
un module d'actionneur (5) selon l'une des revendications précédentes, dont le dispositif de commande d'actionneur (43) reçoit des signaux de commande ECU (S5) du dispositif de commande de dynamique de conduite (3a) et dont l'actionneur (45, 46) commande au moins un des freins de roue (20, 21),
le dispositif de commande de dynamique de conduite (3a) effectuant un réglage de dynamique de conduite en recevant les signaux de mesure de dynamique de conduite compensés (S50) du module d'actionneur (5) et en émettant les signaux de commande de freinage (S5) au module d'actionneur (5) pour le freinage sélectif d'un ou de plusieurs freins de roue (20, 21).

19. Système de freinage (2) selon la revendication 18, **caractérisé en ce que** le dispositif de commande de dynamique de conduite (3a) est intégré dans un dispositif de commande de freinage (3) du système de freinage (2), les freins de roue (17, 20, 21) présentant des cylindres de frein pneumatiques (17, 20, 21) et/ou des cylindres de frein hydrauliques (97) et/ou des freins de roue électromécaniques (98).

20. Système de freinage (2) selon la revendication 18 ou 19,
**caractérisé en ce qu'**il s'agit d'un système de freinage (2) électronique, le module d'actionneur (5) étant connecté par l'intermédiaire d'un bus de données (16) interne au véhicule, par exemple un bus CAN (16), à d'autres dispositifs (3, 4) du système de freinage (2) et/ou à d'autres dispositifs du véhicule (1).

21. Système de freinage (2) selon la revendication 20, **caractérisé en ce que** le module d'actionneur (5) est un module de freinage d'essieu, par exemple un module de freinage d'essieu arrière (5) ou un module de freinage d'essieu avant (4), lequel est connecté par l'intermédiaire du bus de données (16) interne au véhicule à au moins un autre module de freinage d'essieu (4) et/ou au dispositif de commande de dynamique de conduite (3a) et émet par l'intermédiaire du bus de données (16) interne au véhicule les signaux de mesure de dynamique de conduite compensés (S50).

22. Véhicule (1), en particulier véhicule utilitaire, comprenant un système de freinage (2) selon l'une des revendications 18 à 21.

23. Procédé de mesure et de traitement d'une grandeur de dynamique de conduite d'un véhicule, comprenant au moins les étapes suivantes :
- émission d'un signal de commande d'actionneur (S45) à un actionneur (45, 46) pour une activité d'actionneur,
- génération d'un signal d'information d'actionneur (S43) indiquant l'activité d'actionneur,
- exécution de l'activité d'actionneur par l'actionneur (45, 46) en fonction du signal de commande d'actionneur (S45)
- mesure d'au moins une grandeur de mesure de dynamique de conduite (aL, aq, psi) du véhicule (1) au moyen d'un dispositif de capteur de dynamique de conduite (36), lequel est relié mécaniquement à l'actionneur (45, 46) dans une unité structurale (60), pendant l'activité d'actionneur et génération d'un signal de mesure de dynamique de conduite (S36), et **caractérisé par** les étapes suivantes
- réception du signal de mesure de dynamique de conduite (S36) et du signal d'information d'actionneur (S43),
- filtrage du signal de mesure de dynamique de conduite (S36) en fonction du signal d'information d'actionneur (S43) et
- émission d'un signal de mesure de dynamique de conduite compensé (S50).
